# EUROPEAN PATENT SPECIFICATION

(11) **EP 3 453 852 B1**
(45) Date of publication and mention of the grant of the patent: **02.10.2019**
(21) Application number: 18181906.1
(22) Date of filing: 05.07.2018
(51) Int. Cl.: F01N 3/022, F01N 3/10, F01N 3/035, B01J 23/00, B01J 35/00

(54) **PARTICULATE FILTER FOR A GASOLINE INTERNAL COMBUSTION ENGINE**
PARTIKELFILTER FÜR EINEN OTTOMOTOR
FILTRE À PARTICULES D'UN MOTEUR À ESSENCE

(30) Priority: 12.09.2017 IT 201700101864
(43) Date of publication of application: 13.03.2019
(73) Proprietor: FCA Italy S.p.A., 10135 Torino (IT)
(72) Inventor: SCALERA, Mr. Nico Valerio, I-10135 Torino (IT); GIOANNINI, Mr. Alberto, I-10135 Torino (IT)
(74) Representative: Notaro, Giancarlo

(56) References cited:
- WO-A1-2011/015615
- GB-A- 2 513 364
- US-B2- 8 815 189

## Description

### Field of the invention

The present invention relates to particulate filters used in exhaust systems of gasoline internal combustion engines. In particular, the invention relates to a particulate filter of the type comprising:
- a structure of porous ceramic material, having an elongated conformation in a main direction, and defining a plurality of parallel channels extending from an upstream end to a downstream end of said structure of porous ceramic material, with reference to a direction of a flow of exhaust gases through said filter,
- said channels comprising first channels only closed at their upstream end and second channels only closed at their downstream end, so as to force the flow of exhaust gases entering the filter to pass from one channel to at least one other channel in order to leave the filter, flowing through the pores of the ceramic material wall defining each channel, and
- a coating of catalyst material applied to said structure of ceramic material substrate,
- wherein the structure of porous ceramic material has a nominal porosity of less than 50% and an average pore size of less than 15 microns.

### Prior art

Particulate filters of the type indicated above are, for example, described in the documents WO 2011/015615 A1, GB 2 513 364 A and US 8,815,189 B2. Filters of the type indicated above are used to remove the particulate from the flow of exhaust gases leaving an internal combustion engine. The filters to which the present invention relates are intended for use with gasoline-fueled internal combustion engines. In known solutions, the aforesaid coating of catalyst material is only applied in the case in which the structure of ceramic material has a high porosity. Otherwise, the pressure drop to which the flow of exhaust gases is subjected when the filter is crossed becomes too high. Since the flow leaving the filter is substantially at atmospheric pressure, there is an unwanted backpressure in the flow of exhaust gases upstream of the filter.

An additional problem that arises in known solutions resides in that the coating of catalyst material that is applied on the portion of the filter closest to the downstream end is subject to degradation and has a consequent loss of catalytic efficiency, following the high temperatures that are reached in this portion of the filter during the regeneration steps of the filter, in which the particulate retained in the filter is eliminated, causing a rise in temperature.

### Object of the invention

The object of the present invention is to overcome the aforementioned drawbacks of the known solutions.

### Summary of the invention

In view of achieving the aforesaid object, the invention relates to a particulate filter comprising:
- a structure of porous ceramic material, having a conformation elongated in a main direction, and defining a plurality of parallel channels extending from an upstream end to a downstream end of said structure of porous ceramic material, with reference to a direction of a flow of exhaust gases through said filter,
- said channels comprising first channels only closed at their upstream end and second channels only closed at their downstream end, so as to force the flow of exhaust gases entering the filter to pass from one channel to at least one other channel in order to leave the filter, flowing through the pores of the ceramic material wall defining each channel, and
- a coating of catalyst material applied to said structure of ceramic material substrate,
- wherein the structure of porous ceramic material has a relatively low nominal porosity of less than 50% and an average pore size of less than 15 microns,
- said coating of catalyst material is only present on a portion of said ceramic material structure adjacent to said upstream end, and extending in said main direction for a length of not less than 10 mm and not more than 80% of the overall length of said structure of porous ceramic material,
- in such a way that in said upstream portion of the ceramic material structure, the coating of catalyst material covers both said first channels and said second channels, while in the remaining portion of the ceramic material structure, the coating of catalyst material is absent from both said first channels and from said second channels, and
- in that the ratio between the quantity by weight of catalyst material and the volume of the filter is less than 61 g/liter.

Thanks to the aforesaid characteristics, the filter according to the invention is able to implement a series of important advantages: firstly, adopting a structure of ceramic material with low porosity, with pores having a hydraulic diameter of reduced dimensions to obtain a high filtering capacity. Secondly, adopting a coating of catalyst material gives the filter a catalytic capacity that allows reduction of the pollutants present in the flow of exhaust gases. Nevertheless, the concentration of the catalyst material on just an upstream portion of the filter allows obtainment of a lower backpressure upstream of the filter relative to known solutions that use high porosity materials with a catalyst applied over the entire length of the filter, while ensuring the same level of catalytic capacity. Finally, the absence of catalyst material on the downstream portion of the filter avoids the drawback of a thermal degradation of the catalyst material due to the high temperatures that are reached in this downstream portion of the filter during the regeneration steps of the filter.

In the preferred embodiment of the filter according to the invention, the length of the upstream portion of the filter on which the coating of catalyst material is applied is between 25% and 60% of the overall length of the ceramic material structure.

Preferably, moreover, the number of channels per surface unit of the cross-sectional area of the structure of porous ceramic material is greater than 300 per square inch (46.5 channels per every square centimeter of the filter section). Furthermore, the nominal thickness of the wall of each of said channels is preferably less than 0.165 mm. Furthermore, the ratio between the amount by weight of the catalyst material and the volume of the filter is less than 61 g/liter (1 g/in³). Still preferably, the filter according to the invention has an Open Frontal Area (OFA) greater than 37%. The value of this OFA parameter becomes greater than 75% if the caps of the channels at the ends of the channels are not considered.

With respect to the known solutions in which a low porosity porous ceramic structure is provided without any coating of catalyst material, the filter according to the invention has the clear advantage of allowing a catalytic action for the abatement of pollutants.

Compared to conventional solutions that use high-porosity ceramic material structures, equipped with a coating of catalyst material, the filter according to the invention has the advantage of establishing a lower backpressure upstream of the filter, without affecting the required levels of catalytic efficiency and filtration efficiency for the abatement of pollutants.

Furthermore, eliminating the coating of catalyst material in the downstream portion of the filter avoids the disadvantage of thermal degradation of the catalyst material.

### Description of an embodiment

One embodiment of the present invention will now be described with reference to the attached drawing, provided purely by way of nonlimiting example, which illustrates a cross-sectional view of a particulate filter according to the invention.

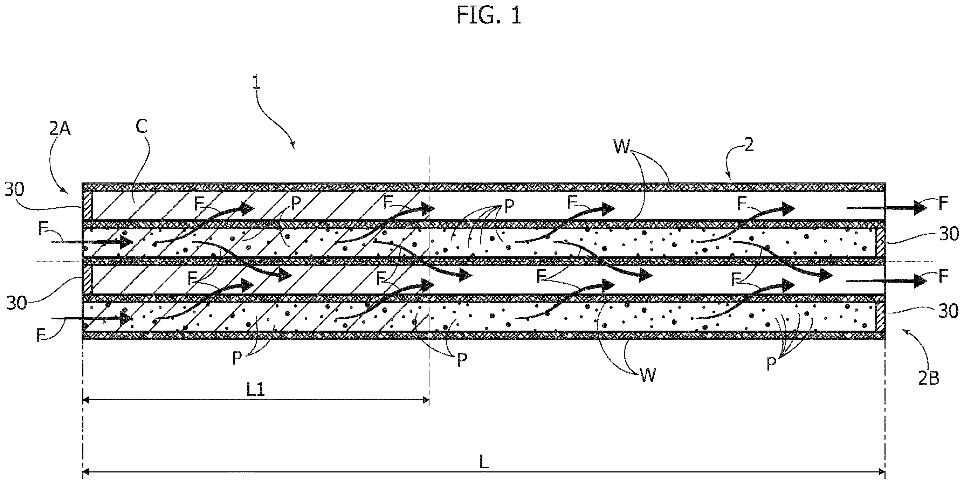

With reference to Figure 1, numeral 1 indicates - in its entirety - a particulate filter for a gasoline-fueled internal combustion engine.

The filter 1 comprises a structure of porous ceramic material 2 having a substantially cylindrical and elongated conformation, including a honeycomb arrangement of longitudinal channels 3, which can have, for example, a square or hexagonal cross-section, and which extend from an upstream end 2A of the filter 1, to a downstream end 2B of the filter 1 (with reference to the direction of flow of the exhaust gases through the filter).

According to the conventional technique, each of the channels 3 is closed by a cap 30, of any suitable material, at just one of its upstream ends or at one of its downstream ends. Therefore, the channels 3 comprise first channels closed only at their upstream ends and second channels closed only at their downstream ends. Consequently, the flow of exhaust gases coming from the internal combustion engine (indicated by the arrows F) is forced to pass from each channel 3 at least to one other channel 3 adjacent thereto before leaving the filter. In this way, the flow of exhaust gases is forced to cross the walls W of the channels, flowing through the pores of these walls, in such a way that the particulate P remains blocked upstream or inside each wall.

Of course, the representation of Figure 1 is purely schematic regarding the size of the filter and the size and shape of the channels 3. In the case of the present invention, the number of channels per surface unit of the cross-sectional area of the structure of porous ceramic material is greater than 300 per square inch (46.5 channels per square centimeter). The thickness of the wall W of each of the channels 3 is preferably less than 0.165 mm.

The structure of ceramic material can be of any known type and form and can be made by any known method, as is clear to those skilled in the art.

In the case of the present invention, a ceramic material structure having a relatively low porosity is adopted, with pores having a smaller hydraulic diameter. In particular, the porosity of the walls W of the structure 2 is less than 50% and the average pore size of the walls W is less than 15 microns.

Still according to the invention, a coating of catalyst material is applied on an upstream portion of the filter 1, having a length L1 less than the overall length L of the filter. Also regarding the catalyst material and the method by which it is applied, it is possible to adopt any technique among those known to experts skilled in the art. According to an important characteristic of the invention, the length L1 of the upstream portion of the filter on which the coating of catalyst material is applied is not less than 10 mm and is not greater than 80% of the overall length L of the ceramic material structure 2.

Preferably, however, the length L1 of the upstream portion of the filter, on which the coating of catalyst material is applied, is between 25% and 60% of the overall length L of the ceramic material structure 2.

Still preferably, the ratio between the amount by weight of the catalyst material and the volume of the filter is less than 61 g/liter (1 g/in³⁾.

Thanks to all the aforesaid characteristics, the filter according to the invention is able to implement a series of important advantages. Firstly, adopting a structure of ceramic material with low porosity, with pores having a hydraulic diameter of reduced dimensions, allows a high filtering capacity to be obtained. Secondly, adopting a coating of catalyst material gives the filter a catalytic capacity that allows reduction of the pollutants present in the flow of exhaust gases. Nevertheless, the concentration of the catalyst material on just an upstream portion of the filter avoids a backpressure upstream of the filter that is too high, while ensuring the necessary catalytic capacity. Finally, the absence of catalyst material on the downstream portion of the filter avoids the drawback of a thermal degradation of the catalyst material due to the high temperatures that are reached in this downstream portion of the filter during regeneration steps of the filter.

In the preferred embodiment of the filter according to the invention, the filter has an open frontal area (OFA) of more than 37% (greater than 75% if the caps 30 are not considered). This gives rise to a greater ash storage capacity due to the combustion of oil and gasoline additives or residues of other components or particulates, so that, at the same level of filling with these materials, the filter according to the invention produces a lower drop in upstream pressure, compared to a traditional system.

Of course, without prejudice to the principle of the invention, the details of construction and the embodiments may vary widely with respect to those described and illustrated purely by way of example, without departing from the scope of the present invention.

## Claims

1. A particulate filter for a gasoline internal combustion engine, comprising:
- a structure (2) of porous ceramic material, having a conformation elongated in a main direction, and defining a plurality of parallel channels (3) extending from an upstream end (2A) to a downstream end (2B) of said structure of porous ceramic material (2), with reference to a direction of a flow of exhaust gases through said filter,
- said channels (3) comprising first channels only closed at their upstream end (2A) and second channels only closed at their downstream end (2B), so as to force the flow of exhaust gases entering the filter to pass from one channel (3) to at least one other channel in order to leave the filter, flowing through the pores of the ceramic material wall (W) defining each channel (3), and
- a coating (C) of catalyst material applied to said structure of ceramic material (2),
- wherein the structure of porous ceramic material (2) has a nominal porosity of less than 50% and an average pore size of less than 15 microns,
- said coating (C) of catalyst material is only present on an upstream portion (L1) of said ceramic material structure (2) adjacent to said upstream end (2A), and extending in said main direction for a length (L1) of not less than 10 mm and not greater than 80% of the overall length (L) of said structure of porous ceramic material (2),
- in such a way that in said upstream portion (L1) of the ceramic material structure (2) the coating of catalyst material (C) covers both said first channels and said second channels, while in the remaining portion of the ceramic material structure (2), the coating of catalyst material (C) is absent from both said first channels and from said second channels, and
- in that the ratio between the amount by weight of catalyst material and the volume of the filter is less than 61 g/liter.

2. A particulate filter according to claim 1, **characterized in that** the length (L1) of the upstream portion of the filter on which the coating of catalyst material is applied is between 25% and 60% of the overall length (L) of the ceramic material structure (2).

3. A particulate filter according to claim 1, **characterized in that** the number of channels (3) per surface unit of the cross-sectional area of the structure of porous ceramic material (2) is greater than 300 per square inch (46.5 channels per square centimeter).

4. A particulate filter according to claim 1, **characterized in that** the nominal thickness of the wall (W) of each of said channels (3) is less than 0.165 mm.

5. A particulate filter according to claim 1, **characterized in that** it has an open frontal area (OFA) greater than 37%.

## Patentansprüche

1. Teilchenfilter für einen Benzinverbrennungsmotor, mit:
- einer Struktur (2) aus porösem Keramikmaterial, das eine in eine Hauptrichtung gestreckte Konformation hat und mehrere parallele Kanäle (3) bildet, die sich von einem stromaufwärtigen Ende (2A) zu einem stromabwärtigen Ende (2B) der Struktur aus porösem Keramikmaterial (2) in Bezug auf eine Richtung des Strömens von Abgasen durch den Filter erstrecken,
- wobei die Kanäle (3) erste Kanäle, die nur an ihrem stromaufwärtigen Ende (2A) geschlossen sind, und zweite Kanäle umfassen, die nur an ihrem stromabwärtigen Ende (2B) geschlossen sind, so dass der Strom aus Abgasen, der in den Filter eintritt, von einem Kanal (3) zu mindestens einem anderen Kanal geführt wird, um den Filter zu verlassen, wobei die Strömung durch die Poren der Wand (W) des Keramikmaterials, die jeden Kanal (3) begrenzt, verläuft, und
- einer Beschichtung (C) aus Katalysatormaterial, die auf die Struktur aus Keramikmaterial (2) aufgebracht ist,
- wobei die Struktur aus porösem Keramikmaterial (2) eine nominale Porosität von kleiner als 50 % und eine mittlere Porengröße von kleiner als 15 µm hat,
- wobei die Beschichtung (C) aus Katalysatormaterial nur auf einem stromaufwärtigen Bereich (L1) der Keramikmaterialstruktur (2) benachbart zu dem stromaufwärtigen Ende (2A) vorhanden ist und sich in der Hauptrichtung über eine Länge (L1) von nicht weniger als 10 mm und nicht mehr als 80 % der Gesamtlänge (L) der Struktur aus porösem Keramikmaterial (2) erstreckt,
- derart, dass in dem stromaufwärtigen Bereich (L1) der Keramikmaterialstruktur (2) die Beschichtung aus Katalysatormaterial (C) sowohl die ersten Kanäle als auch die zweiten Kanäle bedeckt, während in dem verbleibenden Bereich der Keramikmaterialstruktur (2) die Beschichtung aus Katalysatormaterial (C) sowohl auf den ersten Kanälen als auch auf den zweiten Kanälen nicht vorhanden ist, und
- wobei das Verhältnis zwischen dem Gewichtsanteil an Katalysatormaterial und dem Volumen des Filters kleiner als 61 g/Liter ist.

2. Teilchenfilter nach Anspruch 1, **dadurch gekennzeichnet, dass** die Länge (L1) des stromaufwärtigen Bereich des Filters, auf welchem die Beschichtung aus Katalysatormaterial aufgebracht ist, zwischen 25 % und 60 % der Gesamtlänge (L) der Keramikmaterialstruktur (2) liegt.

3. Teilchenfilter nach Anspruch 1, **dadurch gekennzeichnet, dass** die Anzahl an Kanälen (3) pro Flächeneinheit der Querschnittsfläche der Struktur aus porösem Keramikmaterial (2) größer als 300 pro Quadratzoll (46,5 Kanäle pro Quadratzentimeter) ist.

4. Teilchenfilter nach Anspruch 1, **dadurch gekennzeichnet, dass** die nominale Dicke der Wand (W) jedes Kanals (3) kleiner als 0,165 mm ist.

5. Teilchenfilter nach Anspruch 1, **dadurch gekennzeichnet, dass** er eine offene frontale Fläche (OFA) hat, die größer als 37 % ist.

## Revendications

1. Filtre à particules pour un moteur à essence à combustion interne, comprenant :
- une structure (2) en matériau céramique poreux, ayant une conformation allongée dans une direction principale, et définissant une pluralité de canaux parallèles (3) s'étendant d'une extrémité amont (2A) à une extrémité aval (2B) de ladite structure en matériau céramique poreux (2), par rapport à une direction d'un flux de gaz d'échappement à travers ledit filtre,
- lesdits canaux (3) comprenant des premiers canaux fermés uniquement à leur extrémité amont (2A) et des deuxièmes canaux fermés uniquement à leur extrémité aval (2B), de façon à forcer le flux de gaz d'échappement entrant dans le filtre à passer d'un canal (3) à au moins un autre canal afin de quitter le filtre, en s'écoulant à travers les pores de la paroi en matériau céramique (W) définissant chaque canal (3), et
- un revêtement (C) de matériau catalyseur appliqué sur ladite structure en matériau céramique (2),
- où la structure en matériau céramique poreux (2) présente une porosité nominale inférieure à 50% et une dimension moyenne de pore inférieure à 15 microns,
- ledit revêtement (C) de matériau catalyseur n'est présent que sur une partie amont (L1) de ladite structure en matériau céramique (2) adjacente à ladite extrémité amont (2A), et s'étendant dans ladite direction principale sur une longueur (L1) d'au moins 10 mm et d'au plus 80% de la longueur totale (L) de ladite structure en matériau céramique poreux (2),
- de telle manière que dans ladite partie amont (L1) de la structure en matériau céramique (2), le revêtement de matériau catalyseur (C) recouvre à la fois lesdits premiers canaux et lesdits deuxièmes canaux, tandis que dans la partie restante de la structure en matériau céramique (2), le revêtement de matériau catalyseur (C) est absent à la fois desdits premiers canaux et desdits deuxième canaux, et
- que le rapport entre la quantité en poids du matériau catalyseur et le volume du filtre est inférieur à 61 g/litre.

2. Filtre à particules selon la revendication 1, **caractérisé en ce que** la longueur (L1) de la partie amont du filtre sur laquelle le revêtement de matériau catalyseur est appliqué est comprise entre 25% et 60% de la longueur totale (L) de la structure en matériau céramique (2).

3. Filtre à particules selon la revendication 1, **caractérisé en ce que** le nombre de canaux (3) par unité de surface de la surface de section de la structure en matériau céramique poreux (2) est supérieur à 300 par pouce carré (46,5 canaux par centimètre carré).

4. Filtre à particules selon la revendication 1, **caractérisé en ce que** l'épaisseur nominale de la paroi (W) de chacun desdits canaux (3) est inférieure à 0,165 mm.

5. Filtre à particules selon la revendication 1, **caractérisé en ce qu'**il présente une surface frontale ouverte (OFA) supérieure à 37%.
